# FASCICULE DE BREVET EUROPEEN

(11) **EP 2 807 088 B1**
(45) Date de publication et mention de la délivrance du brevet: **16.09.2015**
(21) Numéro de dépôt: 13700739.9
(22) Date de dépôt: 21.01.2013
(51) Int. Cl.: B65D 47/08, B29C 45/14

(54) **DISPOSITIF DE BOUCHAGE EN DEUX PIÈCES ARTICULÉES L'UNE À L'AUTRE ET SON PROCÉDÉ DE FABRICATION**
VERSCHLUSSVORRICHTUNG MIT ZWEI SCHWINGEND MITEINANDER VERBUNDENEN TEILEN SOWIE HERSTELLUNGSVERFAHREN DAFÜR
CAPPING DEVICE COMPRISING TWO PARTS PIVOTABLY CONNECTED TOGETHER, AND METHOD FOR MANUFACTURING SAME

(30) Priorité: 24.01.2012 FR 1250658
(43) Date de publication de la demande: 03.12.2014
(73) Titulaire: Bericap, 21600 Longvic (FR)
(72) Inventeur: PÉCHINOT, Laurent, 71270 Mont-les-Seurre (FR)
(74) Mandataire: Bugnion Genève
(86) Numéro de dépôt international: PCT/EP2013/050996
(87) Numéro de publication internationale: WO 2013/110560

(56) Documents cités:
- US-B1- 6 971 531

## Description

### DOMAINE TECHNIQUE DE L'INVENTION

L'invention se rapporte à un dispositif de bouchage de récipient, selon le préambule de la revendication 1, et notamment, bien que de manière non exclusive, à un dispositif de bouchage d'un récipient contenant un liquide destiné à la consommation humaine. Elle se rapporte en particulier à un dispositif de bouchage articulé constitué d'une embase de fixation à un récipient et d'un capuchon articulé sur l'embase, recouvrant un orifice d'écoulement de l'embase, et plus particulièrement à un tel dispositif de bouchage dont le capuchon et l'embase sont constitués par des matériaux différents soit par leur composition chimique de base, soit par des additifs définissant par exemple des nuances de couleur, ou des propriétés de surface, ou des propriétés mécaniques différentes.

### ÉTAT DE LA TECHNIQUE ANTÉRIEURE

On connaît des dispositifs de bouchage composés d'une embase monobloc comportant une paroi périphérique tubulaire de fixation à un col de récipient, la paroi périphérique de fixation définissant un axe géométrique de référence du dispositif, et d'un capuchon monobloc formant une charnière d'articulation sur l'embase assurant un pivotement du capuchon entre au moins une position ouverte et une position fermée, la charnière comportant une languette d'ancrage enrobée par l'embase. Un dispositif de bouchage de ce type est obtenu par un procédé suivant lequel on forme dans une première étape par moulage une première pièce constituant le capuchon monobloc pourvu de la charnière d'articulation comportant la languette d'ancrage, puis on forme dans une étape ultérieure par moulage une deuxième pièce constituant l'embase monobloc enrobant la languette d'ancrage. Il est donc nécessaire durant cette seconde étape, de placer la languette d'ancrage dans une cavité de moule définissant la forme de l'embase. Il s'avère que, dans la mesure où le positionnement de la languette dans la cavité n'est pas précis, l'enrobage n'est pas aisé à maîtriser, ce qui peut conduire, pour assurer une bonne tenue mécanique, à surdimensionner en épaisseur la partie de l'embase devant recevoir la languette. La sécurité du consommateur n'est ainsi obtenue qu'au prix d'une consommation importante de matière - notamment pour prévenir un éventuel arrachage de la languette et du capuchon par un jeune enfant avec risque d'ingestion ultérieur.

### EXPOSÉ DE L'INVENTION

L'invention vise à remédier aux inconvénients de l'état de la technique et à proposer un dispositif de bouchage en deux pièces reliées par une charnière qui combine un excellent ancrage de la charnière et une faible épaisseur de paroi.

Pour ce faire est proposé, selon un premier aspect de l'invention, un dispositif de bouchage comportant d'une part une embase monobloc comportant une paroi périphérique tubulaire de fixation à un col de récipient, la paroi périphérique de fixation définissant un axe géométrique de référence du dispositif; et d'autre part un capuchon monobloc avec une charnière d'articulation sur l'embase assurant un pivotement du capuchon entre au moins une position ouverte et une position fermée, la charnière comportant une languette d'ancrage enrobée par l'embase, la languette présentant au moins un plot intérieur de positionnement tourné radialement vers l'intérieur et affleurant sur une face radiale intérieure de l'embase, et au moins un plot extérieur de positionnement tourné radialement vers l'extérieur et affleurant sur une face radiale extérieure de l'embase.

Les plots de positionnement permettent, au cours du moulage de l'embase autour de la languette, de maintenir le positionnement de la languette entre deux parois du moule. Ils contribuent en outre à un ancrage de forme de la languette dans la matière constitutive de l'embase.

Préférentiellement, la paroi périphérique de l'embase comporte une couche d'enrobage radial intérieur formant la face radiale intérieure et une couche d'enrobage radial extérieur formant la face radiale extérieure, la couche d'enrobage radial intérieur étant pourvue d'au moins un trou rempli par le plot intérieur de positionnement, la couche d'enrobage radial extérieur étant pourvue d'au moins un trou rempli par le plot extérieur de positionnement. La languette est ainsi logée entre la couche d'enrobage radial intérieur et la couche d'enrobage radial extérieur, les formes complémentaires des plots de positionnement et des trous dans les couches d'enrobage remplis par ces plots assurent un ancrage particulièrement résistant de la charnière dans la paroi périphérique de l'embase.

Suivant un mode de réalisation, l'embase comporte un fond présentant un orifice d'écoulement. L'embase peut alors comporter une jupe intérieure faisant saillie depuis le fond et située radialement à l'extérieur de l'orifice d'écoulement et radialement à l'intérieur et à distance de la paroi périphérique tubulaire de manière à délimiter avec le fond et la paroi périphérique tubulaire un volume annulaire pour loger une extrémité du col du récipient. Le contact entre le col du récipient et les parois de l'embase dans le volume annulaire permet d'assurer une étanchéité. La jupe intérieure peut être pourvue d'un relief annulaire d'étanchéité faisant saillie radialement vers la paroi périphérique, pour maîtriser le contact avec le col du récipient. L'orifice d'écoulement peut avoir un diamètre correspondant au diamètre intérieur de la jupe intérieure, auquel cas le fond constitue simplement une paroi annulaire reliant la jupe intérieure à la paroi périphérique et destiné à recouvrir le rebord du col du récipient. On peut également prévoir un fond qui forme un verseur saillant profilé pour faciliter par exemple une prise en bouche.

Le volume annulaire peut comporter un volume inférieur annulaire pour loger l'extrémité du col et un volume mort supérieur débouchant dans le volume inférieur annulaire et délimité par une partie supérieure de la jupe, le fond et la face radiale intérieure de l'embase. Une même pièce du moule peut ainsi être utilisée pour définir l'ensemble du volume annulaire, sans que son retrait lors du démoulage de l'embase pose problème. Cette pièce du moule est en contact avec le ou les plots de positionnement intérieur, pour une parfaite maîtrise du positionnement de la languette dans le moule de fabrication de l'embase.

Le capuchon est de préférence pourvu d'une jupe d'étanchéité venant, en position fermée, en prise avec des parois de l'orifice d'écoulement, soit par l'intérieur, soit par l'extérieur.

Préférentiellement, l'embase est pourvue d'un siège entourant l'orifice d'écoulement et sur lequel vient reposer le capuchon en position fermée, de manière à protéger l'orifice d'écoulement contre la poussière ou d'autres polluants.

Pour se fixer sur le col du récipient, la paroi périphérique peut comporter au moins un relief intérieur de fixation, par exemple un relief de filetage intérieur.

Le dispositif de bouchage ainsi décrit est particulièrement adapté à la réalisation du capuchon monobloc et de l'embase monobloc dans des matières plastiques différentes. On entend ici par matières différentes des matières qui peuvent différer par leur composition physicochimique de base, soit simplement par des adjuvants. De préférence, les matières plastiques choisies seront compatibles pour une liaison surfacique par forces de Van der Waals. Elles seront également de préférence compatibles pour le recyclage. Enfin, elles seront également le cas échéant compatibles avec l'utilisation envisagée, notamment alimentaire, cosmétique ou médicale.

Suivant un autre aspect de l'invention, celle-ci a trait à un procédé de fabrication d'un dispositif de bouchage suivant lequel l'on forme dans une première étape par moulage une première pièce constituant un capuchon monobloc avec une charnière d'articulation comportant une languette d'ancrage, puis on forme dans une étape ultérieure par surmoulage une deuxième pièce constituant une embase monobloc enrobant la languette d'ancrage, en prenant soin, durant la première étape, de former par moulage sur la languette au moins un plot intérieur de positionnement tourné radialement vers l'intérieur et au moins un plot extérieur de positionnement tourné radialement vers l'extérieur et, durant la deuxième étape, de disposer la languette dans une cavité du moule définissant la deuxième pièce de manière à ce que, lors du surmoulage de la deuxième pièce, le plot intérieur de positionnement soit en appui contre une première face de le cavité et le plot extérieur de positionnement soit en appui contre une deuxième face de la cavité.

Grâce aux dispositions prises pour le positionnement de la languette durant l'injection de la matière constitutive de l'embase, on réalise un excellent ancrage de la languette dans l'embase, sans avoir besoin de surdimensionner l'épaisseur de l'embase dans la région de la languette.

Suivant un mode de réalisation préféré, la première face est formée sur une pièce annulaire du moule séparant une partie annulaire extérieure de la cavité destinée à la formation d'une paroi périphérique tubulaire de l'embase et une partie annulaire intérieure de la cavité, destinée à la formation d'une jupe intérieure de l'embase. Le mouvement relatif de l'embase et de la pièce annulaire du moule lors du démoulage est de préférence un mouvement axial suivant l'axe de la pièce annulaire.

De préférence, le moulage est un moulage par injection ou bi-injection. Ainsi, durant la première étape, on fait pénétrer de la matière constitutive de la première pièce par injection dans une cavité du moule définissant la première pièce. De manière similaire, lors de la deuxième étape, on peut faire pénétrer de la matière constitutive de la deuxième pièce par injection dans la cavité du moule définissant la deuxième pièce. Toutefois, on peut également procéder pour l'une ou l'autre des étapes par tout autre procédé de moulage.

### BRÈVE DESCRIPTION DES FIGURES

D'autres caractéristiques et avantages de l'invention ressortiront à la lecture de la description qui suit, en référence aux figures annexées, qui illustrent :
- la figure 1, une vue en perspective d'un dispositif de bouchage selon un mode de réalisation de l'invention, en position ouverte, permettant notamment de visualiser trois axes X-X, A-A et B-B utiles à la définitions des figures suivantes ;
- la figure 2, une vue en perspective d'une coupe du dispositif de bouchage de la figure 1, par un plan de symétrie contenant les axes X-X et A-A, le dispositif de bouchage étant en position fermée ;
- la figure 3, une vue en coupe du dispositif de bouchage de la figure 1, par le plan de coupe de la figure 2, le dispositif de bouchage étant en position fermée ;
- la figure 4, une vue en perspective d'un capuchon du dispositif de bouchage de la figure 1, dans un état ouvert ;
- la figure 5, une autre vue en perspective du capuchon de la figure 4 ;
- la figure 6, une vue en perspective d'une coupe du dispositif de bouchage de la figure 1 par un plan VI-VI illustré sur la figure 3, perpendiculaire à l'axe X-X, le dispositif de bouchage étant en position ouverte ;
- la figure 7, une vue en perspective d'une coupe du dispositif de bouchage de la figure 1 par un plan VII-VII illustré sur la figure 3, parallèle à l'axe X-X et à l'axe B-B de la figure 1 ;
- la figure 8, une vue en perspective d'une coupe du dispositif de bouchage de la figure 1, par un plan déduit du plan de la figure 2 par rotation d'un angle de 3° autour de l'axe X-X, le dispositif de bouchage étant en position fermée ;
- la figure 9, une vue en coupe du dispositif de bouchage de la figure 1, par le plan de coupe de la figure 8, le dispositif de bouchage étant en position fermée ;
- la figure 10, une vue en perspective d'une coupe du dispositif de bouchage de la figure 1, par un plan déduit du plan de la figure 2 par rotation d'un angle de 20° autour de l'axe X-X, le dispositif de bouchage étant en position fermée ;
- la figure 11, une vue en coupe du dispositif de bouchage de la figure 1, par le plan de coupe de la figure 10, le dispositif de bouchage étant en position fermée.

Pour plus de clarté, les éléments identiques sont repérés par des signes de référence identiques sur l'ensemble des figures.

### DESCRIPTION DETAILLEE D'UN MODE DE RÉALISATION

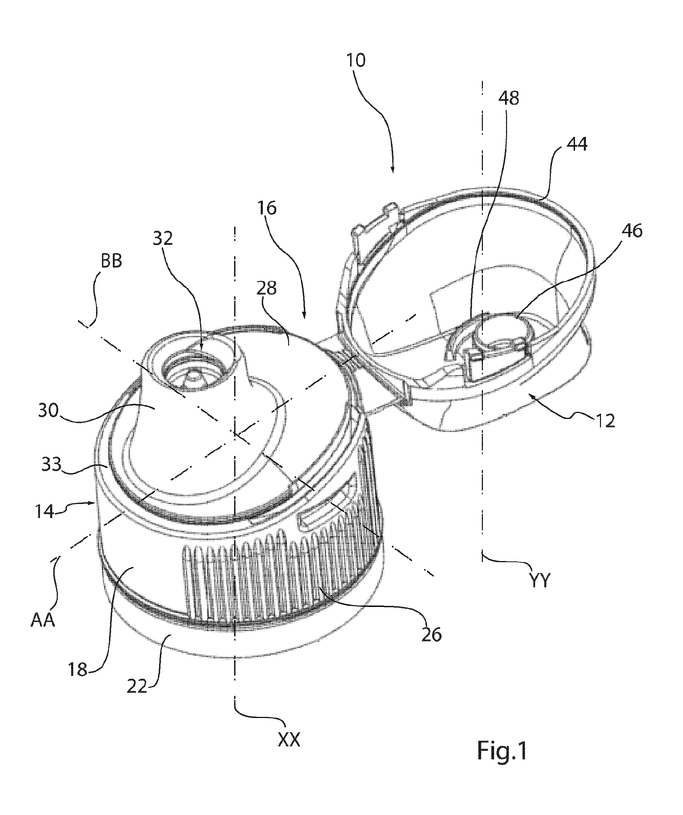

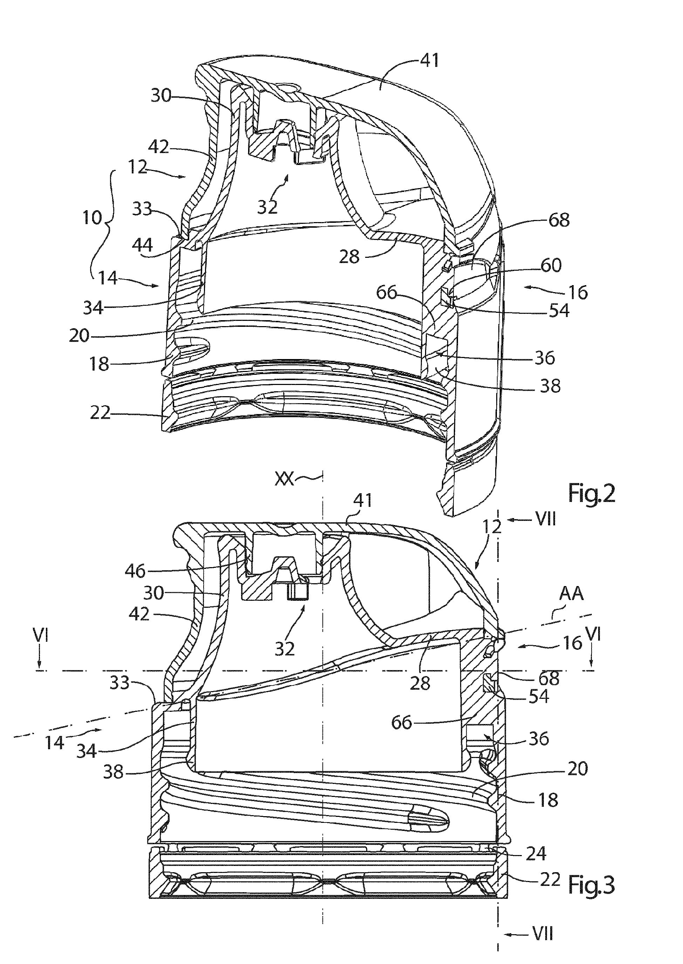

Le dispositif de bouchage **10** illustré sur la figure 1 en position ouverte comporte deux pièces en matière plastique, à savoir un capuchon **12** et une embase **14** pourvue d'une charnière **16** d'articulation à l'embase. L'embase **14** comporte une paroi périphérique tubulaire extérieure **18** définissant un axe géométrique de référence **X-X** pour l'ensemble du dispositif de bouchage **10.** La paroi périphérique extérieure **18** est pourvue sur sa face intérieure d'un filetage intérieur **20,** visible sur les figures 2 et 3 et destiné à venir se visser sur un col de récipient. Elle peut être prolongée à son extrémité opposée au capuchon **12** par une bague de sécurité **22**, reliée par exemple à l'extrémité libre de la paroi périphérique extérieure **18** par des pontets sécables **24.** Elle peut également présenter des cannelures axiales **26** sur sa face extérieure.

L'embase **14** est pourvue d'un fond **28** fermant la paroi périphérique extérieure **18** et formant un verseur tubulaire **30** dont l'ouverture **32** présente une section réduite par rapport à la section du col du récipient et par rapport à la paroi périphérique extérieure **18**, pour faciliter et diriger l'écoulement hors du récipient et permettre, par exemple, une prise directe en bouche par le consommateur. Le fond **28** forme une paroi sensiblement plane et oblique par rapport à l'axe géométrique de référence, le verseur tubulaire **30** faisant saillie axialement depuis cette paroi **28** vers le haut dans la direction axiale opposée à la paroi périphérique **18** et de manière centrée ou excentrée par rapport à l'axe géométrique de référence **X-X.** A la jonction du fond **28** et de la paroi périphérique **18**, la périphérie de l'embase forme un siège **33** continu en courbe fermée pour le positionnement et l'étanchéité du capuchon **12.** L'embase est également pourvue d'une jupe intérieure d'étanchéité **34** qui fait saillie depuis le fond **28** vers le récipient, et se situe à l'intérieur, en regard et à distance de la paroi périphérique **18**, de manière à ménager entre la paroi périphérique **18**, le fond **28** et la jupe d'étanchiété **34** un volume annulaire **36** de logement du rebord du col du récipient. La jupe peut présenter un jonc d'étanchéité **38** formant un bourrelet tourné radialement vers la paroi périphérique **18.** Du fait de l'orientation générale oblique du fond **28** par rapport à l'axe géométrique de référence **X**-**X**, le siège 33 s'inscrit en vue du dessus sensiblement dans une ellipse, présentant un grand axe **A-A** et un petit axe **B-B,** le grand axe **A-A** étant la corde de plus grande dimension et le petit axe **B-B** étant la corde de plus petite dimension perpendiculaire au grand axe. La paroi périphérique extérieure **18** présente une hauteur, mesurée parallèlement à l'axe **X-X,** maximale à une extrémité du grand axe qui sera dite haute et une hauteur minimale à l'autre extrémité du grand axe, qui sera dite dans la suite basse.

La charnière **16** est située à l'extrémité haute du grand axe **A-A**, radialement à l'extérieur du siège **33** et présente un axe de pivotementperpendiculaire au grand axe **A-A** et à l'axe de référence **X-X**. En l'espèce, la charnière **16** est constituée d'une charnière réactive bistable ayant une forme générale de papillon. Le verseur **30** est quant à lui situé en partie basse du fond **28**, à proximité de l'extrémité basse du grand axe **A-A** et à l'opposé de la charnière **16**, ce que l'on peut traduire par le fait que la projection géométrique de l'orifice **32** du verseur **30** sur le grand axe **A-A** parallèlement à l'axe géométrique de référence **X-X** est plus proche de l'extrémité basse du grand axe **A-A** que de son extrémité haute. Ce positionnement du verseur **30** permet de maximiser sa hauteur par rapport à la paroi du fond **28** de laquelle il fait saillie, pour une hauteur totale donnée de l'embase **14.** Il permet également de positionner la charnière **16** de façon à ce que l'axe de rotation de la charnière, perpendiculaire à l'axe de référence **X-X** et au grand axe **A-A**, soit le plus haut possible, ce qui donne au capuchon **12** une trajectoire limitant favorablement les collisions avec le verseur saillant **30.**

Comme on le constate sur les figures, le fond **28** n'est pas strictement plan mais au contraire légèrement ondulé, l'ellipse dont il a été question précédemment se définissant strictement comme l'ellipse passant par le point le plus hautet le point le plus bas de la jonction **33** entre la paroi périphérique **18** et le fond **28** (mesurés parallèlement à l'axe de référence), et se trouvant dans l'enveloppe cylindrique définie par la paroi périphérique **18.** La forme en demi-onde du fond **28** permet de maximiser la hauteur de la paroi périphérique **18** dans la partie la plus proche de la charnière **16**, ce qui facilite l'ancrage de la charnière dans l'embase, comme il sera discuté plus loin.

Le capuchon **12** est destiné, dans la position fermée de la figure 3, à recouvrir et protéger le verseur **30** et plus généralement l'ensemble du fond **28** de l'embase **14.** On peut définir un axe géométrique de référence **Y-Y** lié au capuchon **12** et confondu avec l'axe géométrique **X-X** de l'embase et du dispositif de bouchage en position fermée. Naturellement, cet axe de référence **Y-Y** du capuchon pivote autour de l'axe de rotation de la charnière **16** avec le capuchon, d'où sa position sur la figure **1**. Le capuchon **12** présente un fond **41** sensiblement plan et perpendiculaire à l'axe géométrique de référence **Y-Y** du capuchon, et une paroi périphérique **42** de forme gauche faisant saillie à partir du fond **41** pour recouvrir et envelopper le fond de l'embase **14.** La paroi périphérique **42** présente un rebord **44** formant une courbe fermée, destiné à venir en appui axial et radial sur le siège **33** pour y établir une étanchéité en position fermée, sans discontinuité sur l'ensemble du pourtour du siège **33.** Le fond **41** du capuchon est en outre pourvu d'une jupe intérieure d'étanchéité **46** destinée à s'insérer dans l'orifice **32** du verseur **30**, et d'ailettes de maintien **48** destinées à venir, en position fermée, en appui contre le rebord extérieur du verseur **30**, afin de reprendre certains efforts latéraux et d'éviter une sollicitation importante de la jupe d'étanchéité ou de la charnière **16** si, avant ouverture, le capuchon **12** subit des chocs, par exemple lors du transport, du stockage ou de la manutention du récipient fermé par le dispositif de bouchage **10.**

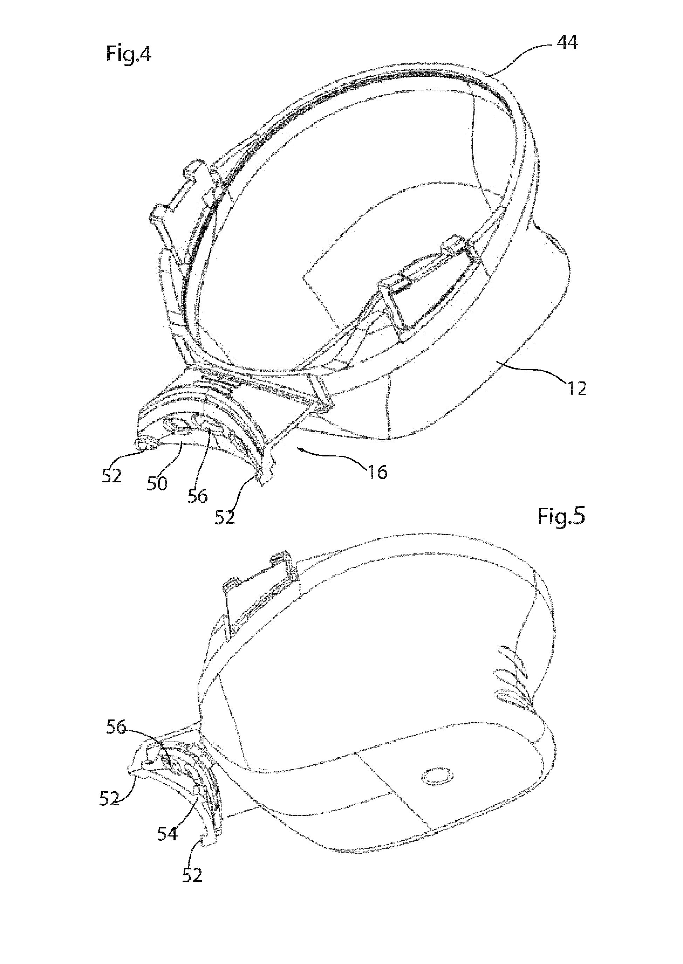

Les figures 4 et 5 permettent de visualiser le capuchon seul, et notamment sa zone d'ancrage dans le corps de l'embase. Cette zone constitue une languette **50** arquée, d'épaisseur sensiblement constante en direction radiale, avec toutefois deux plots latéraux **52** faisant saillie radialement vers l'intérieur et un plot médian **54** faisant saillie radialement vers l'extérieur, ainsi que des trous **56**, ici au nombre de trois. Comme l'illustrent les figures, cette languette est destinée à être enrobée par la matière constitutive de l'embase.

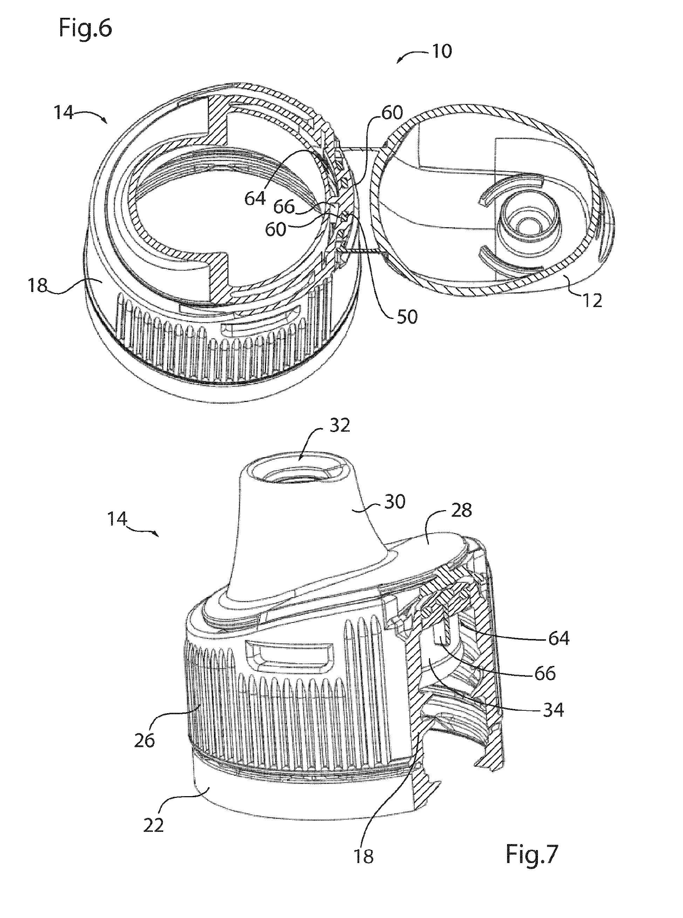

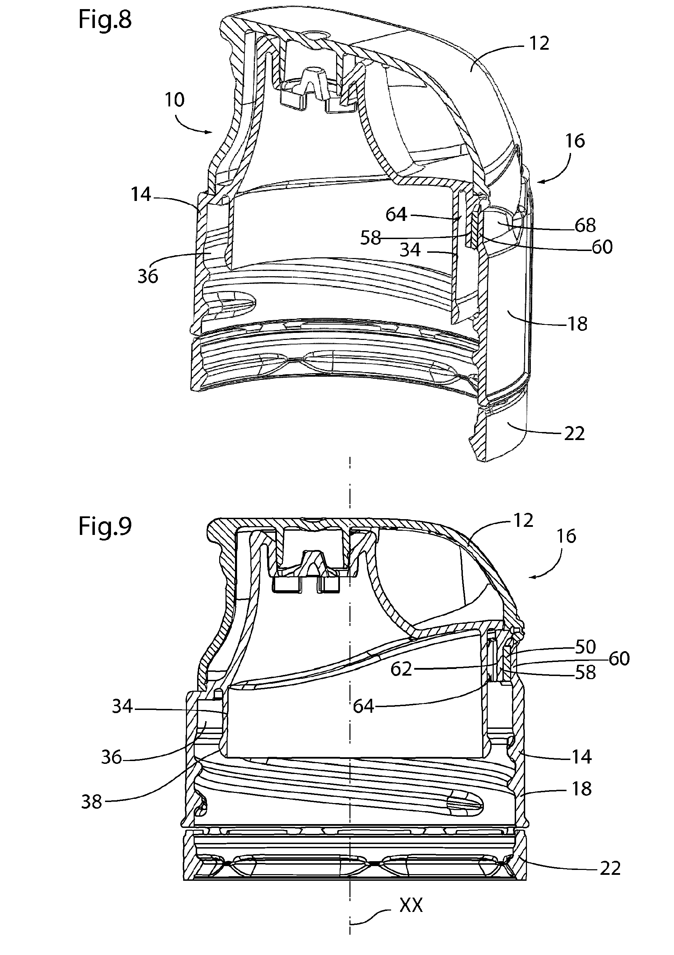

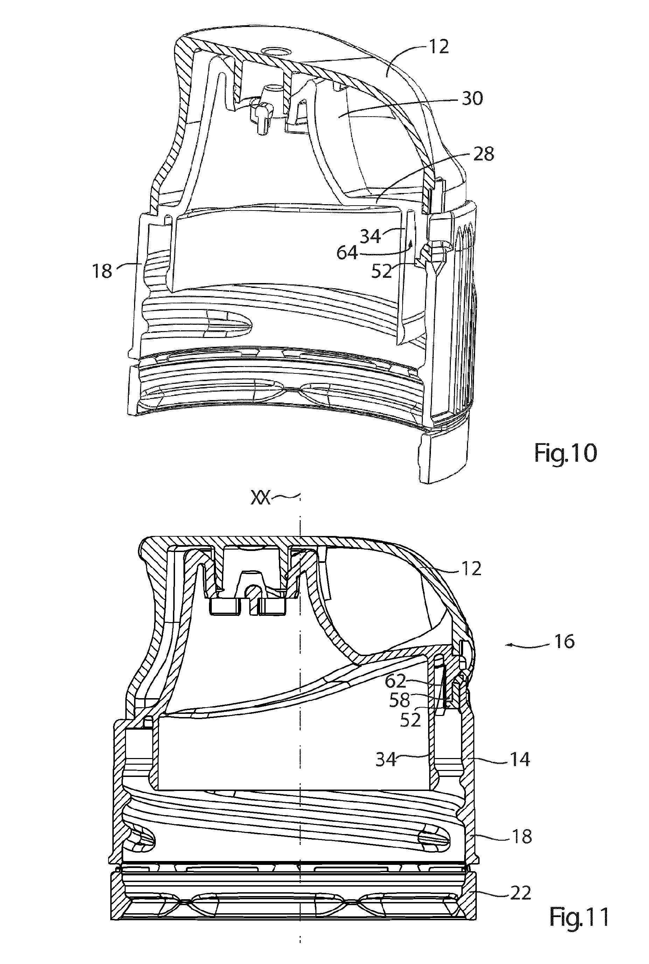

Les figures 4 et 5 illustrent un état intermédiaire dans la fabrication du dispositif de bouchage **10**, après moulage de la pièce constituant le capuchon **12**, mais avant surmoulage de la pièce constituant l'embase **14.** A l'issue du moulage de l'embase, par un procédé que l'on détaillera plus loin, la languette **50** se trouve surmoulée par la matière constitutive de l'embase. Les figures 6 et 7 illustrent l'imbrication entre les pièces **12** et **14** au niveau de la languette **50**, et notamment les zones correspondant aux trous **56**, occupées par la matière de l'embase. On constate également, notamment sur les figures 8 et 9, que la languette **50** est prise en sandwich entre deux couches **58, 60** de la matière constitutive de l'embase, la couche **58** étant située radialement à l'intérieur de la languette pour recouvrir une face intérieure de la languette, et la couche **60** étant située radialement à l'extérieur de la languette **50** pour recouvrir une face extérieure de la languette **50.** On constate également que la couche intérieure **58** présente une face **62** disposée en regard et à distance de la jupe **34**, délimitant avec la jupe **34** et le fond **28** une partie supérieure **64** du volume **36.** Il est à noter que cette partie supérieure **64** du volume **36** n'est pas visible dans le plan de coupe des figures 2 et 3, du fait de la présence, dans ce plan de coupe, d'une nervure de consolidation **66** reliant la jupe **34** et la paroi périphérique **18**, le positionnement de cette nervure **66** devenant particulièrement explicite sur les figure 6 et 7. On constate également que, du fait de l'inclinaison de la paroi du fond **28** correspondant à l'inclinaison de l'axe **A-A**, la partie supérieure **64** du volume **36** n'est pas nécessairement annulaire, et est principalement située du côté de la charnière **16** où sa fonction va être déterminante comme expliqué plus loin. On constate également sur les figures 10 et 11 que les plots **52** de la languette **50** affleurent au niveau de cette la face **62** de la couche **58.** De manière similaire, on constate sur les figures 2 et 3 que le plot médian **54** de la languette **50** du capuchon **12** affleure sur une face extérieure **68** de la couche extérieure **60.**

Cette description du dispositif de bouchage **10** étant achevée, on va maintenant expliciter comment est obtenu, lors de la fabrication du dispositif de bouchage, l'enrobage de la languette **50 par** la matière de l'embase **14.**

Dans un premier temps, la pièce constitutive du capuchon est fabriquée par moulage à partir d'une matière plastique, par exemple une matière plastique thermoformable injectée dans une cavité de moule. A l'issue de cette première étape de fabrication, le capuchon **12** présente la forme représentée sur les figures 4 et 5.

La languette **50** du capuchon **12** est ensuite positionnée dans une cavité de moule délimitant les formes de l'embase. Ce positionnement peut être obtenu soit en déplaçant le capuchon **12** ou au moins sa languette **50** après moulage du capuchon, soit en déplaçant des parois d'un moule à plusieurs cavités, pour recréer une cavité autour de la languette **50** alors qu'une partie du capuchon **12** reste dans la cavité qui a servi à son moulage.

L'affleurement précédemment décrit des plots **52** sur une face **62** d'une couche de matière **58** de l'embase, et du plot **54** sur une face **68** d'une couche de matière **60** de l'embase signifie que les plots **52** et **54** sont en contact avec des parois de la cavité du moule définissant l'embase. Ce contact en plusieurs points, ici trois points espacés, permet d'assurer un positionnement précis de la languette **50** dans le moule, avant remplissage par la matière plastique constitutive de l'embase.

Pour permettre un tel contact, il est naturellement nécessaire d'avoir prévus des parois de moule qui encadrent la languette **50**, tout en laissant un volume correspondant aux couches de matériau **58** et **60.** Ceci ne pose pas de problème du côté extérieur. A l'intérieur de la paroi périphérique **18**, on prévoit une pièce du moule qui remplit ce qui deviendra le volume **34**, et en particulier la partie haute **64** de ce volume, définissant les faces en regard de la jupe et de la couche intérieure **58** de la paroi périphérique **18.** Lors de l'éjection de l'embase **14** à la fin du moulage, le mouvement relatif de la pièce du moule définissant le volume **34** et sa partie haute **64** par rapport à l'embase **14** est un mouvement parallèle à l'axe **X-X**. On obtient à l'issue du surmoulage un enrobage de la languette par les couches intérieure **58** et extérieure **60**, dont les épaisseurs sont maîtrisées du fait des plots de positionnement **52**, **54** de la languette **50** dans le moule. Les trous **56** se trouvent également remplis par la matière constitutive de l'embase **14**, assurant une liaison de matière entre les couches **58** et **60** et une prise en sandwich de la languette entre ces couches.

Diverses variantes peuvent être envisagées. En particulier, la charnière peut être de tout type compatible avec au moins une languette : lanière avec ou sans rappel vers l'une des positions d'ouverture ou de fermeture, avec ou sans point mort, charnière réactive de tout type.

Le dispositif de bouchage **10** peut être moulé en position ouverte puis refermé, soit dans le moule avant éjection de la pièce, soit directement en sortie de moule, soit à un stade ultérieur de fabrication ou d'assemblage sur le récipient auquel le dispositif de bouchage est destiné. Le moulage du capuchon **12** peut être fait en positionnant la charnière **16** et la languette **50** dans une position correspondant à l'état fermé du dispositif de bouchage.

Le fond **28** peut prendre diverses formes et définir une ouverture **32** plus ou moins large, avec ou sans verseur saillant **30.** L'ouverture peut par exemple être au diamètre intérieur de la jupe **34**, auquel cas le fond est réduit à un anneau de matière couvrant le rebord du col du récipient et reliant la jupe **34** à la paroi périphérique extérieure **18.**

Divers moyens d'étanchéité peuvent être prévu pour assurer l'étanchéité dans le volume annulaire **36**, notamment une ou plusieurs lèvres d'étanchéité disposées sur la paroi du fond **28**, voire sur la face intérieure de la paroi périphérique **18.**

L'invention est par ailleurs applicable à un dispositif de bouchage sans fond 28 et sans jupe intérieure **34.**

L'inclinaison de l'axe **A-A** s'avère avantageuse pour définir une zone pour l'insertion de la languette. Toutefois, l'invention est parfaitement transposable à un dispositif de bouchage dont le plan de joint entre capuchon **12** et embase **14** est perpendiculaire à l'axe de l'embase **X-X**.

Le nombre et le positionnement des plots **52**, **54** peuvent être librement choisis. De préférence le nombre de plots est supérieur ou égal à trois, mais un positionnement satisfaisant peut également être obtenu avec deux plots seulement, tournés l'un radialement vers l'intérieur et l'autre radialement vers l'extérieur.

## Revendications

1. Dispositif de bouchage (10) comportant :
- une embase monobloc (14) comportant une paroi périphérique tubulaire de fixation (18) à un col de récipient, la paroi périphérique de fixation (18) définissant un axe géométrique de référence (X-X) du dispositif ;
- un capuchon monobloc (12) avec une charnière d'articulation (16) sur l'embase assurant un pivotement du capuchon (12) entre au moins une position ouverte et une position fermée, la charnière (16) comportant une languette d'ancrage (50) enrobée par l'embase (14) ;
**caractérisé en ce que** la languette d'ancrage (50) présente au moins un plot intérieur de positionnement (52) tourné radialement vers l'intérieur et affleurant sur une face radiale intérieure (62) de l'embase, et au moins un plot extérieur de positionnement (54) tourné radialement vers l'extérieur et affleurant sur une face radiale extérieure (68) de l'embase.

2. Dispositif de bouchage selon la revendication 1, **caractérisé en ce que** la paroi périphérique (18) de l'embase comporte une couche d'enrobage radial intérieur (58) formant la face radiale intérieure (62) et une couche d'enrobage radial extérieur (60) formant la face radiale extérieure (68), la couche d'enrobage radial intérieur (58) étant pourvue d'au moins un trou rempli par le plot intérieur de positionnement (58), la couche d'enrobage radial extérieur étant pourvue d'au moins un trou rempli par le plot extérieur de positionnement (60).

3. Dispositif de bouchage selon l'une quelconque des revendications précédentes, **caractérisé en ce que** l'embase comporte un fond (28) présentant un orifice d'écoulement (32).

4. Dispositif de bouchage selon la revendication 3, **caractérisé en ce que** l'embase (14) comporte une jupe intérieure (34) faisant saillie depuis le fond (28) et située radialement à l'extérieur de l'orifice d'écoulement (32) et radialement à l'intérieur et à distance de la paroi périphérique tubulaire (18) de manière à délimiter avec le fond (28) et la paroi périphérique tubulaire (18) un volume annulaire (36) pour loger une extrémité du col du récipient.

5. Dispositif de bouchage selon la revendication 4, **caractérisé en ce que** le volume annulaire (36) comporte un volume inférieur annulaire pour loger l'extrémité du col et un volume mort supérieur (64) débouchant dans le volume inférieur annulaire (36) et délimité par une partie supérieure de la jupe (34), le fond (28) et la face radiale intérieure (58) de l'embase (14).

6. Dispositif de bouchage selon l'une quelconque des revendications 4 à 5, **caractérisé en ce que** la jupe intérieure (34) est pourvue d'un relief annulaire d'étanchéité (36) faisant saillie radialement vers la paroi périphérique (18).

7. Dispositif de bouchage selon l'une quelconque des revendications 4 à 6, **caractérisé en ce que** le capuchon (12) est pourvu d'une jupe d'étanchéité (46) venant, en position fermée, en prise avec des parois (30) de l'orifice d'écoulement (32).

8. Dispositif de bouchage selon l'une quelconque des revendications précédentes, **caractérisé en ce que** l'embase (14) est pourvue d'un siège (33) entourant l'orifice (32) d'écoulement et sur lequel vient reposer le capuchon (12) en position fermée.

9. Dispositif de bouchage selon l'une quelconque des revendications précédentes, **caractérisé en ce que** la paroi périphérique (18) comporte au moins un relief de fixation (20) intérieur.

10. Dispositif de bouchage selon l'une quelconque des revendications précédentes, **caractérisé en ce que** le capuchon monobloc (12) et l'embase monobloc (14) sont réalisés dans des matières plastiques différentes.

11. Dispositif de bouchage selon l'une quelconque des revendications précédentes, **caractérisé en ce que** la languette (50) comporte au moins un trou (56) rempli par l'embase (14).

12. Procédé de fabrication d'un dispositif de bouchage suivant lequel on forme dans une première étape par moulage une première pièce constituant un capuchon monobloc (12) avec une charnière d'articulation (16) comportant une languette d'ancrage (50), puis on forme dans une étape ultérieure par surmoulage une deuxième pièce constituant une embase monobloc (14) enrobant la languette d'ancrage (50), **caractérisé en ce que** durant la première étape, on forme par moulage sur la languette (50) au moins un plot intérieur de positionnement (52) tourné radialement vers l'intérieur et au moins un plot extérieur de positionnement (54) tourné radialement vers l'extérieur et **en ce que** durant la deuxième étape, la languette (50) est disposée dans une cavité du moule définissant la deuxième pièce de manière à ce que, lors du surmoulage de la deuxième pièce (14), le plot intérieur de positionnement (52) soit en appui contre une première face de la cavité et le plot extérieur de positionnement (54) soit en appui contre une deuxième face de la cavité.

13. Procédé de moulage selon la revendication 12, **caractérisé en ce que** la première face est formée sur une pièce annulaire du moule séparant une partie annulaire extérieure de la cavité, destinée à la formation d'une paroi périphérique tubulaire (18) de l'embase et une partie annulaire intérieure de la cavité, destinée à la formation d'une jupe intérieure (34) de l'embase.

14. Procédé de moulage selon la revendication 12 ou la revendication 13 **caractérisé en ce que** lors de la première étape, on fait pénétrer de la matière constitutive de la première pièce par injection dans une cavité du moule définissant la première pièce.

15. Procédé de moulage selon l'une quelconque des revendications 12 à 14, **caractérisé en ce que** lors de la deuxième étape, on fait pénétrer de la matière constitutive de la deuxième pièce par injection dans la cavité du moule définissant la deuxième pièce.

## Patentansprüche

1. Verschlussvorrichtung (10), die aufweist:
- eine Einblock-Basis (14), die eine rohrförmige periphere Befestigungswand (18) an einem Behälterhals aufweist, wobei die periphere Befestigungswand (18) eine geometrische Referenzachse (X-X) der Vorrichtung definiert,
- einen Einblock-Verschluss (12) mit einem Gelenkscharnier (16) auf der Basis, das ein Schwenken des Verschlusses (12) zwischen mindestens einer geöffneten Stellung und einer geschlossenen Stellung sichert, wobei das Scharnier (16) eine von der Basis (14) umschlossene Verankerungszunge (50) aufweist,
**dadurch gekennzeichnet, dass** die Verankerungszunge (50) mindestens einen inneren, radial nach innen zeigenden und über eine radiale Innenseite (62) der Basis hinausragenden Positionierungsstift (52) und mindestens einen äußeren, radial nach außen zeigenden und über eine radiale Außenseite (68) der Basis hinausragenden Positionierungsstift (54) aufweist.

2. Verschlussvorrichtung nach Anspruch 1, **dadurch gekennzeichnet, dass** die periphere Wand (18) der Basis eine radiale innere Mantelschicht (58), die die radiale Innenseite (62) bildet, und eine radiale äußere Mantelschicht (60), die die radiale Außenseite (68) bildet, aufweist, wobei die radiale innere Mantelschicht (58) mit mindestens einem von dem inneren Positionierstift (58) gefüllten Loch ausgestattet ist, wobei die radiale äußere Mantelschicht mit mindestens einem von dem äußeren Positionierstift (60) gefüllten Loch ausgestattet ist.

3. Verschlussvorrichtung nach einem der vorangehenden Ansprüche, **dadurch gekennzeichnet, dass** die Basis einen Boden (28) aufweist, der eine Abflussöffnung (32) aufweist.

4. Verschlussvorrichtung nach Anspruch 3, **dadurch gekennzeichnet, dass** die Basis (14) eine innere Schürze (34) aufweist, die sich ab dem Boden (28) erstreckt und sich radial außerhalb der Abflussöffnung (32) und radial innerhalb und im Abstand zur rohrförmigen peripheren Wand (18) erstreckt, so dass mit dem Boden (28) und der rohrförmigen peripheren Wand (18) ein ringförmiges Volumen (36) begrenzt wird, um ein Ende des Behälterhalses aufzunehmen.

5. Verschlussvorrichtung nach Anspruch 4, **dadurch gekennzeichnet, dass** das ringförmige Volumen (36) ein unteres ringförmiges Volumen, um das Ende des Halses aufzunehmen, aufweist, und ein oberes totes Volumen (64), das in das untere ringförmige Volumen (36) mündet und von einem oberen Teil des Mantels (36), dem Boden (28) und der radialen Innenseite (58) der Basis (14) begrenzt ist.

6. Verschlussvorrichtung nach einem der Ansprüche 4 bis 5, **dadurch gekennzeichnet, dass** die innere Schürze (34) mit einem ringförmigen Dichtungsrelief (36) ausgestattet ist, das sich radial in Richtung der periphere Wand (18) erstreckt.

7. Verschlussvorrichtung nach einem der Ansprüche 4 bis 6, **dadurch gekennzeichnet, dass** der Verschluss (12) mit einer Dichtungsschürze (46) ausgestattet ist, die in geschlossener Stellung in die Wände (30) der Abflussöffnung (32) eingreift.

8. Verschlussvorrichtung nach einem der vorangehenden Ansprüche, **dadurch gekennzeichnet, dass** die Basis (14) mit einem Sitz (33) ausgestattet ist, der die Abflussöffnung (32) umgibt und auf dem sich der Verschluss (12) in geschlossener Stellung abstützt.

9. Verschlussvorrichtung nach einem der vorangehenden Ansprüche, **dadurch gekennzeichnet, dass** die periphere Wand (18) mindestens ein inneres Befestigungsrelief (20) aufweist.

10. Verschlussvorrichtung nach einem der vorangehenden Ansprüche, **dadurch gekennzeichnet, dass** der Einblock-Verschluss (12) und die Einblock-Basis (14) aus unterschiedlichen Kunststoffmaterialien hergestellt sind.

11. Verschlussvorrichtung nach einem der vorangehenden Ansprüche, **dadurch gekennzeichnet, dass** die Zunge (50) mindestens ein von der Basis (14) gefülltes Loch (56) aufweist.

12. Herstellungsverfahren einer Verschlussvorrichtung, wobei bei einem ersten Schritt durch Formen ein erstes Teil geformt wird, das einen Einblock-Verschluss (12) mit einem Gelenkscharnier (16) mit einer Verankerungszunge (50) bildet, danach bei einem weiteren Schritt durch Overmoulding ein zweites Teil geformt wird, das eine Einblock-Basis (14) bildet, die die Verankerungszunge (50) umgibt, **dadurch gekennzeichnet, dass** während des ersten Schritts auf der Zunge (50) mindestens ein innerer Positionierstift (52), der radial nach innen zeigt, und mindestens ein äußerer Positionierstift (54), der radial nach außen zeigt, durch Formen geformt wird, und dass bei dem zweiten Schritt die Zunge (50) in einem Hohlraum der Form angeordnet ist, der das zweite Teil definiert, so dass sich beim Overmoulding des zweiten Teils (14) der innere Positionierstift (52) auf einer ersten Seite des Hohlraums abstützt und der äußere Positionierstift (54) auf einer zweiten Seite des Hohlraums abstützt.

13. Formungsverfahren nach Anspruch 12, **dadurch gekennzeichnet, dass** die erste Seite auf einem ringförmigen Teil der Form geformt wird, das einen äußeren ringförmigen Teil von dem Hohlraum, der zur Bildung einer rohrförmigen peripheren Wand (18) der Basis bestimmt ist, und einen inneren ringförmigen Teil des Hohlraums, der zur Bildung einer inneren Schürze (34) der Basis bestimmt ist, trennt.

14. Formungsverfahren nach Anspruch 12 oder Anspruch 13, **dadurch gekennzeichnet, dass** beim ersten Schritt Material, welches das erste Teil bildet, in einen Hohlraum der Form eingespritzt wird, der das erste Teil definiert.

15. Formungsverfahren nach einem der Ansprüche 12 bis 14, **dadurch gekennzeichnet, dass** beim zweiten Schritt Material, welches das zweite Teil bildet, in einem Hohlraum der Form eingespritzt wird, der das zweite Teil definiert.

## Claims

1. A closure device (10) including:
- a single-piece base (14) including a tubular peripheral fastening wall (18) for fastening to a container neck, the peripheral fastening wall (18) defining a geometric reference axis (X-X) of the device;
- a single-piece cap (12) with an articulation hinge (16) on the base ensuring pivoting of the cap (12) between at least an open position and a closed position, the hinge (16) including an anchoring tongue (50) coated by the base (14);
**characterized in that** the anchoring tongue (50) has at least one inner positioning stud (52) turned radially inward and flush on an inner radial face (62) of the base, and at least one outer positioning stud (54) turned radially outward and flush on an outer radial face (68) of the base.

2. The closure device according to claim 1, **characterized in that** the peripheral wall (18) of the base includes an inner radial coating layer (58) forming the inner radial face (62) and an outer radial coating layer (60) forming the outer radial face (68), the inner radial coating layer (58) being provided with at least one hole filled by the inner positioning stud (58), the outer radial coating layer being provided with at least one hole filled by the outer positioning stud (60).

3. The closure device according to any one of the preceding claims, **characterized in that** the base includes a bottom (28) having a flow orifice (32).

4. The closure device according to claim 3, **characterized in that** the base (14) includes an inner skirt (34) protruding from the bottom (28) and situated radially outside the flow orifice (32) and radially inside and separated from the tubular peripheral wall (18) so as to delimit, with the bottom (28) and the tubular peripheral wall (18), an annular volume (36) for housing one end of the neck of the container.

5. The closure device according to claim 4, **characterized in that** the annular volume (36) includes a lower annular volume for housing the end of the neck and an upper dead space (64) emerging in the annular lower volume (36) and delimited by an upper part of the skirt (34), the bottom (28) and the inner radial face (58) of the base (14).

6. The closure device according to any one of claims 4 to 5, **characterized in that** the inner skirt (34) is provided with a raised annular seal (36) protruding radially toward the peripheral wall (18).

7. The closure device according to any one of claims 4 to 6, **characterized in that** the cap (12) is provided with a sealing skirt (46) engaging, in the closed position, with walls (30) of the flow orifice (32).

8. The closure device according to any one of the preceding claims, **characterized in that** the base (14) is provided with a seat (33) surrounding the flow orifice (32) and on which the cap (12) rests in the closed position.

9. The closure device according to any one of the preceding claims, **characterized in that** the peripheral wall (18) includes at least one raised inner fastening part (20).

10. The closure device according to any one of the preceding claims, **characterized in that** single-piece cap (12) and the single-piece base (14) are made from different plastic materials.

11. The closure device according to any one of the preceding claims, **characterized in that** the tongue (50) includes at least one hole (56) filled by the base (14).

12. A method for manufacturing a closure device wherein a first step consists of forming, by molding, a first part making up a single-piece cap (12) with an articulation hinge (16) including an anchoring tongue (50), then a subsequent step consisting of forming, by overmolding, a second part forming a single-piece base (14) coating the anchoring tongue (50), **characterized in that** during the first step, molding is done to form, on the tongue (50), at least one inner positioning stud (52) turned radially inward and at least one outer positioning stud (54) turned radially outward, and **in that** during the second step, the tongue (50) is positioned in a cavity of the mold defining the second part such that, during the overmolding of the second part (14), the inner positioning stud (52) bears against a first face of the cavity and the outer positioning stud (54) bears against a second face of the cavity.

13. The molding method according to claim 12, **characterized in that** the first face is formed on an annular part of the mold separating an outer annular part of the cavity, designed to form a tubular peripheral wall (18) of the base, and an inner annular part of the cavity, designed to form an inner skirt (34) of the base.

14. The molding method according to claim 12 or claim 13, **characterized in that** during the first step, the material making up the first part penetrates, by injection, a cavity of the mold defining the first part.

15. The molding method according to any one of claims 12 to 14, **characterized in that** during the second step, the material making up the second part penetrates, by injection, the cavity of the mold defining the second part.
